# EUROPÄISCHE PATENTANMELDUNG

(11) **EP 1 018 531 A2**
(43) Veröffentlichungstag der Anmeldung: **12.07.2000**
(21) Anmeldenummer: 99122911.3
(22) Anmeldetag: 18.11.1999
(51) Int. Cl.: C08J 7/04, C08J 7/06, C09K 3/18

(54) **Hydrophobierungsverfahren für polymere Substrate**

(30) Priorität: 08.01.1999 DE 19900494
(71) Anmelder: CREAVIS Gesellschaft für Technologie und Innovation mbH, 45764 Marl (DE)
(72) Erfinder: Lohmer, Gunther Dr., 45470 Mülheim (DE); Ottersbach, Peter, Dr., 51570 Windeck (DE)

(57) **Zusammenfassung**

Die Erfindung betrifft ein Verfahren zur Herstellung von dauerhaft hydrophoben Beschichtungen auf polymeren Substanzen, wobei das polymere Substrat zunächst mit einem Silanderivat und anschließend mit einer hydrophoben Verbindung umgesetzt wird, und die Oberfläche des polymeren Substrats nach der Umsetzung mit dem Silanderivat eine Strukturierung aufweist.

Weiterhin betrifft die Erfindung die Verwendung der beschichteten polymeren Substrate sowie Erzeugnisse, hergestellt aus den beschichteten Substraten.

## Beschreibung

Die vorliegende Erfindung betrifft ein Verfahren zur dauerhaft hydrophoben Beschichtung von polymeren Substraten.

Oberflächen, von denen Wasser leicht abläuft, müssen entweder sehr hydrophil oder hydrophob sein. Hydrophile Oberflächen besitzen geringe Kontaktwinkel mit Wasser; dies bewirkt eine rasche Verteilung des Wassers auf der Oberfläche und schließlich ein schnelles Ablaufen des so entstandenen Wasserfilms von der Oberfläche.

Hydrophobe Oberflächen dagegen sorgen mittels eines großen Kontaktwinkels mit Wasser für eine Tropfenbildung. Diese Tropfen können auf geneigten Oberflächen schnell abrollen.

Gegenstände mit schwer benetzbaren Oberflächen weisen eine Reihe von interessanten und wirtschaftlich wichtigen Merkmalen auf. So sind sie leicht zu reinigen und bieten Rückständen wenig Halt. Diese Eigenschaften betreffen insbesondere transparente und ästhetisch ansprechende Gegenstände.

Der Einsatz von hydrophoben Materialien wie perfluorierte Polymere zur Herstellung von hydrophoben Oberflächen ist bekannt; eine Weiterentwicklung dieser Oberflächen besteht darin, die Oberflächen im µm- bis nm-Bereich zu strukturieren.

US-PS 5 599 489 offenbart ein Verfahren zur Strukturierung von Oberflächen, bei dem eine Oberfläche durch Beschuß mit Partikeln einer entsprechenden Größe und anschließender Perfluorierung besonders wasserabweisend ausgestattet werden kann.

Ein anderes Verfahren beschreiben H. Saito et al. in Surface Coating International 4, 1997, S. 168 ff. Hier werden Partikel aus Fluorpolymeren auf Metalloberflächen aufgebaut, wobei eine stark erniedrigte Benetzbarkeit der so erzeugten Oberflächen gegenüber Wasser und eine erheblich reduzierte Vereisungsneigung festgestellt wurde.

In US-PS 3 354 022 und WO 96/04123 sind weitere Verfahren zur Erniedrigung der Benetzbarkeit von Gegenständen durch topologische Veränderungen der Oberflächen beschrieben. Hier werden künstliche Erhebungen bzw. Vertiefungen mit einer Höhe von ca. 5 bis 1000 µm und einem Abstand von ca. 5 bis 500 µm auf hydrophobe oder nach der Strukturierung hydrophobierte Werkstoffe aufgebracht. Oberflächen dieser Art führen zu einer schnellen Tropfeubildung, wobei die abrollenden Tropfen Schmutzteilchen aufnehmen und somit die Oberfläche reinigen.

Oberflächen dieser Art besitzen einen hohen Kontakt- oder Randwinkel mit Wasser, werden jedoch von Flüssigkeiten wie Öl vollständig benetzt. Einmal benetzt, ist auch der durch die Struktur gegebene Effekt des hohen Kontaktwinkels mit Wasser verloren. Die Anwendung solcher Materialien ist also auf Gebiete beschränkt, wo keine ölfilmbildenden Flüssigkeiten (z. B. im Straßenverkehr) vorkommen.

Die Strukturierung von Oberflächen in den genannten Dimensionen - es handelt sich in der Regel um Mikrostrukturen - ist ein aufwendiges und damit teures Verfahren. Besondere Probleme ergeben sich bei Spritzgußverfahren, da die mikrostrukturierten Negativ-Formen ein einfaches Ablösen des Spritzgußkörpers verhindern oder die Mikrostruktur des Formkörpers durch den Ablösevorgang zerstört werden kann.

Aufgabe der vorliegenden Erfindung war es, ein Verfahren zur dauerhaft hydrophoben Beschichtung von Polymeren bereitzustellen, das einfach durchzuführen ist und Beschichtungen liefert, die durch einfaches Abspülen z. B. mit Wasser gereinigt werden können.

Überraschenderweise wurde gefunden, daß polymere Substrate durch sukzessives Umsetzen mit funktionalisierten Silanderivaten und einer hydrophoben Verbindung in einfacher Weise hydrophob beschichtet werden können.

Gegenstand der vorliegenden Erfindung ist daher ein Verfahren zur Herstellung von hydrophoben Beschichtungen von polymeren Substraten, wobei die polymeren Substrate zunächst mit einem Silvanderivat der Formel (I)

[Y(R¹Z)ₘR²]ₙSiR³ₒX₄₋ₙ₋ₒ (I)

mit
- o =: 0 bis 2,
- n =: 0 bis (3 - o),
- m =: 0 bis 5
- R¹, R², R³ =: C₁-C₁₂-Alkylrest, C₂-C₁₂-Alkylenrest, Phenylrest oder Phenylalkylrest,
wobei R² und R³ jeweils gleich oder verschieden zu R¹ sind,
- Y =: HS-, H₂N-, HR¹N-, R¹₂N-, -Cl, -Br, -I, -CN, R¹S-, 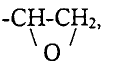 -SO₂Cl, OCN-, -CO₂R¹, -SCN
- Z =: -S-, -O-, R¹N-, HN-,
- X =: F-, Cl-, Br-, I-, R⁴O-, HO-, H-, -NR₂¹
mit
- R⁴ =: C₁-C₆-Alkylrest,
C₂-C₈-Alkoxyrest,
C₅-C₇-cycloaliphatischer Rest,
-C(O)R¹,
-Si(CH₃)₃
Phenylrest oder Phenylalkylrest,
und anschließend mit einer hydrophoben Verbindung umgesetzt werden, wobei die Oberfläche des polymeren Substrates nach der Umsetzung mit dem Silanderivat eine Strukturierung aufweist.

Folgende Silanderivate sind für die Durchführung des erfindungsgemäßen Verfahrens besonders geeignet:
H₂NC₃H₆Si(OCH₃)₃,
H₂NC₂H₄NHC₃H₆Si(OCH₃)₃,
HSC₃H₆Si(OCH₃)₃,
H₂NC₂H₄NHC₂H₄NHC₃H₆Si(OCH₃)₃,
(CH₃)₂NC₃H₆Si(OCH₃)₃,
H₂N(C₆H₄)C₃H₆Si(OCH₃)₃,
BrC₃H₆Si(OCH₃)₃,
H₂NC₂H₄NHC₂H₄(C₆H₄)C₃H₆Si(OCH₃)₃,

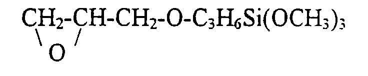

Außerdem ist Gegenstand der vorliegenden Erfindung die Verwendung der erfindungsgemäß beschichteten Oberflächen zur Herstellung von mit polaren Flüssigkeiten nicht oder nur schwer benetzbaren Erzeugnissen.

Die Beschichtung von Oberflächen mittels Chlorsilanen ist in einem anderen technischen Gebiet, der Hydrophilierung oder Verbesserung der Gleitfähigkeit von Oberflächen, bekannt. So offenbart EP-0 599 150 ein Verfahren, bei dem ein Substrat zunächst mit Chlorsilanen behandelt wird. Die Chlorsilane werden adsorbiert und nachträglich hydrolysiert. Auf diese Schicht kann eine weitere Schicht, z. B. Saccharine, Polyether oder Polyvinylamine chemisch gebunden werden. Das Verfahren wird insbesondere auf Glas als Substrat angewendet, da die Chlorsilane über funktionelle Gruppen an das Substrat binden. Werden Substrate ohne funktionelle Gruppen beschichtet, so muß vor der Beschichtung eine Aktivierung des Substrats z. B. mit UV-Strahlung durchgeführt werden.

Ein ähnliches Verfahren wird in US 5 736 251 zur Verbesserung der Gleitfähigkeit von Polymeren beschrieben. Die Polymeren werden, gegebenenfalls nach einer zusätzlichen Aktivierung, mit vernetzbaren Silanen behandelt und anschließend in Gegenwart von Wasser und gegebenenfalls eines Katalysators ausgehärtet. Dadurch bildet sich eine dicke vernetzte Siloxanschicht, die unter bestimmten Bedingungen auch inselförmige Erhebungen aufweisen. Die so modifizierte Gleitfähigkeit der Polymeren ist von der Art und Länge der Substituenten des Silans abhängig, wobei Substituenten mit mehr als 10 C-Atomen weniger effektiv sind als kurzkettige Substituten.

Eine andere Methode zur Hydrophobierung von Oberflächen offenbart EP-0 492 545. Hier werden polymere Substrate mit einer rnonomolekularen Schicht aus fluorhaltigen Organosilanen beschichtet. EP-0 482 613 lehrt ein ähnliches Verfahren, wobei zunächst eine Polysiloxanschicht auf einem Substrat durch Reaktion des Substrats mit Chlorosilylverbindungen erzeugt wird. Die Polysiloxanschicht wird anschließend mit einem Fluorocarbonsiloxanderisat umgesetzt, so daß eine fluorierte, hydrophobe Schicht auf dem Substrat erhalten wird. Eine Strukturierung der so erhaltenen Oberfläche wird nicht erwähnt. Weiterhin sind Fluorcarbonsiloxane aufwendig herzustellen und teuer.

Erfindungsgemäß beschichtete Oberflächen weisen besonders hohe Randwinkel auf. Dies verhindert weitgehend die Benetzung der Oberfläche und führt zu einer raschen Tropfenbildung. Die Tropfen können bei entsprechender Neigung der Oberfläche auf den Erhebungen abrollen, nehmen hierbei Schmutzpartikel auf und reinigen somit gleichzeitig die Oberfläche.

Oberflächen im Sinne der vorliegenden Erfindung sind nicht nur hydrophob, sondern auch oleophob. Diese Eigenschaft erweitert die Anwendungsbereiche der erfindungsgemäß beschichteten Oberflächen auch auf Gebiete, wo mit ölhaltigen Flüssigkeiten oder Verschmutzungen zu rechnen ist, so z. B. Straßen-, Bahn- und Flugverkehr sowie in industriellen Fertigungsanlagen.

Gegenstände mit erfindungsgemäß beschichteten Oberflächen sind sehr leicht zu reinigen. Sofern abrollende Tropfen von z. B. Regenwasser, Tau oder sonstigem, im Einsatzbereich des Gegenstandes vorkommenden Wasser zur Reinigung nicht ausreichen, können die Gegenstände durch einfaches Abspülen mit Wasser gereinigt werden.

Bakterien und andere Mikroorganismen benötigen zur Adhäsion an eine Oberfläche oder zur Vermehrung auf einer Oberfläche Wasser, welches an den hydrophoben Oberflächen der vorliegenden Erfindung nicht zur Verfügung steht. Erfindungsgemäß strukturierte Oberflächen verhindern somit das Anwachsen von Bakterien und anderen Mikroorganismen und sind daher bateriophob und/oder antimikrobiell.

Die Charakterisierung von Oberflächen bezüglich ihrer Benetzbarkeit kann über die Messung der Oberflächenenergie erfolgen. Diese Größe ist z. B. über Messung der Randwinkel am glatten Material von verschiedenen Flüssigkeiten zugänglich (D. K. Owens, R. C. Wendt, J. Appl. Polym. Sci. 13, 1741 (1969)) und wird in mN/m (Milli-Newton pro Meter) angegeben. Nach Owens et al. bestimmt, weisen glatte Polytetrafluorethylen-Oberflächen eine Oberflächenenergie von 17.1 mN/m auf, wobei der Randwinkel mit Wasser 110 ° beträgt. Allgemein besitzen hydrophobe Materialien mit Wasser Kontakt- oder Randwinkel von über 90 °. Erfindungsgemäß beschichtete Materialien weisen je nach verwendeter hydrophober Verbindung einen Randwinkel von 105 bis 135 ° auf.

Das erfindungsgemäße Verfahren bietet gegenüber den herkömmlichen Verfahren entscheidende Vorteile:

Die eingesetzten Silanderivate bilden keinen durchgehenden Film auf der Substratoberfläche, sondern isolierte Tropfen. Diese Tropfen können einen Durchmesser von circa 0.1-30 µm haben, weisen eine enge Verteilung auf und sind mit der Substratoberfläche fest, zum Teil kovalent, verbunden. Der mittlere Tropfendurchmesser kann durch Variation der Beschichtungsparameter eingestellt werden. An der Oberfläche der Tropfen befinden sich die funktionellen Gruppen (Y in Formel I) des eingesetzten Silanderivats, die für eine weitere chemische Umsetzung dort zugänglich sind. Setzt man nun diese Gruppen mit einer monomeren oder polymeren hydrophoben Verbindung um, so entsteht eine chemische oder physikalische Anbindung dieser Verbindung über das Silanderivat zum Substrat.

Die Bildung der Tropfen bewirkt eine Mikrostrukturierung der Substratoberfläche und damit verbunden eine makroskopische, oberflächliche Hydrophobierung. Es bleiben aber genügend unbehandelte Stellen auf der Oberfläche zurück, so daß die physiologischen oder mechanischen Eigenschaften des Polymersubstrats nicht wesentlich verändert werden.

Die Anwendung des Silanderivats auf der Substratoberfläche erfolgt vorzugsweise in Lösung. Dabei kann das Lösungsmittel auch als zusätzliches Quellungsmittel wirken.

Lösungen im Bereich von 0.1-5.0 Vol% Silanderivat, vorzugsweise in Hexan als Lösungsmittel, haben sich in der Praxis bewährt. Aber auch andere, das Substrat quellende Lösungsmittel wie z. B. Tetrahydrofuran, Cyclohexan oder Toluol sind im erfindungsgemäßen Verfahren einsetzbar.

Man taucht das zu behandelnde Substrat in eine solche Lösung des Silanderivats ca 1 s bis 10 min oder bis zur vollständigen Quellung des Substrates, vorzugsweise 1-150 s bei Raumtemperatur ein und trocknet anschließend.

Während des Trocknungsprozesses muß keine bestimmte Temperatur eingehalten werden; Raumtemperatur (20-25 °C) ist in den meisten Fällen ausreichend. Vorteilhaft ist jedoch eine Thermostatisierung abhängig vom Dampfdruck des Lösungsmittels im Bereich von 0 bis 40 °C während der Trocknung. Der Trocknungsprozeß kann unter Schutzgas oder auch an Luft durchgeführt werden, wobei eine staubfreie Atmosphäre zu empfehlen ist.

In bestimmten Fällen, bei denen nur gewünschte Flächen behandelt werden sollen, kann das Eintauchen auch teilweise erfolgen. Alternativ zum Eintauchen kann der Auftrag des Silanderivats auch durch Besprühen oder durch Aufstreichen erfolgen.

Das Silanderivat kann aber auch lösungsmittelfrei aus der Gasphase auf der Substratoberfläche abgeschieden werden. Hier sind ggf. längere Reaktions- oder Quellungszeiten einzuhalten, auf den Trocknungsschritt kann hier verzichtet werden.

Nach Umsetzen des polymeren Substrats mit dem Silanderivat gemäß Formel I kann die so erhaltene Tropfenschicht hydrolysiert werden. Diese Hydrolyse kann während oder auch nach dem Trocknen erfolgen. Zweckmäßig erfolgt die Hydrolyse während des Trocknens an Luft, da der Wassergehalt der Luft in der Regel eine weitgehende Hydrolyse ermöglicht. Eine andere Möglichkeit besteht darin, nach erfolgter Trocknung eine schonende Wasserdampfbehandlung des beschichteten Substrats durchzuführen. Die Hydrolyse soll möglichst vollständig sein. Da auch polymere Substrate mittels des erfindungsgemäßen Verfahrens beschichtet werden können, die bereits einen hydrophoben Charakter besitzen, ist mit einer nicht vollständigen Hydrolyse zu rechnen. Hydrolysezeiten an Luft von 4 Stunden haben sich in der Praxis bewährt. Bei einer Wasserdampfbehandlung ist von ca. 2 Stunden Behandlungszeit auszugehen. An die Hydrolyse der beschichteten Substrate kann sich eine Trocknung bei 40-150 °C, bevorzugt bei 70-130 °C, anschließen.

Nach der Umsetzung des Substrats mit dem Silanderivat, der Hydrolyse und eventuell abschließender Trocknung bei erhöhter Temperatur erfolgt die Behandlung mit der hydrophoben Verbindung.

Im erfindungsgemäßen Verfahren können alle hydrophoben Verbindungen eingesetzt werden, die mit dem Silanderivat nach dessen Umsetzung mit dem polymeren Substrat eine ionische, adsorptive und oder kovalente Bindung eingehen und direkt oder nach einer zusätzlichen chemischen Umsetzung eine ausreichende Wasserabstoßung gewährleisten.

Bewährt haben sich Verbindungen, die eine funktionelle Gruppe wie z. B. eine Carboxylatgruppe enthalten, über die die Bindung zum Silanderivat ausgebildet wird. Zusätzlich zu einer funktionellen Gruppe kann die hydrophobe Verbindung mindestens eine hydrophobe Alkyl- oder Phenylgruppe, die ganz oder teilweise fluoriert sein können, enthalten. Im erfindungsgemäßen Verfahren können als hydrophobe Verbindung z. B. Perfluoralkylsulfonylhalogenide, 1,2-Epoxy-3-perfluoralkylpropane, Perfluoralkylalkohole, Perfluoralkylhalogenide, Brom- oder Chlorperfluoralkylacetylester, Alkylhalogenide, Benzylhalogenide, Perfluoralkylcarbonsäuren, Alkylcarbonsäuren oder deren Ester oder Anhydride sowie Gemische dieser Verbindungen eingesetzt werden.

Weiterhin können als hydrophobe Verbindung auch fluorhaltige Polymere oder Copolymere wie z. B. Perfluoralkyl-ethyl(meth)acrylat-Copolymerisate gemäß EP 0 698 047 eingesetzt werden. Vorteilhaft enthalten die fluorhaltigen Polymere oder Copolymere funktionelle Gruppen wie Carboxylate, Anhydride oder Epoxygruppen.

Die hydrophoben Verbindungen werden zweckmäßig in Lösung mit einem organischen Lösungsmittel aufgebracht. Die Behandlungszeiten betragen 1 bis 60 min, die Temperaturen liegen zwischen 20 und 90 °C.

An die Umsetzungen des polymeren Substrats mit dem Silanderivat und den hydrophoben Verbindungen kann sich eine Trocknung bei 20 bis 150 °C, bevorzugt bei 50 bis 130 °C, besonders bevorzugt bei 80 bis 120 °C anschließen. Auf diese Trocknung kann in einigen Fällen eine chemische Reaktion, z. B. eine Veresterung zur Verbesserung der hydrophoben Eigenschaften folgen.

Während der Umsetzung der hydrophoben Verbindung mit dem bereits beschichteten Substrat oder auch bei der anschließenden Trocknung erfolgt die Anbindung dieser Verbindung über das Silanderivat an das polymere Substrat. Dies kann chemisch oder rein physikalisch erfolgen.

Mittels des erfindungsgemäßen Verfahrens können alle polymeren Substrate beschichtet werden, die mit dem Silanderivat oder dessen Lösung verträglich sind. Als polymeres Substrat können insbesondere Polysiloxane wie Polydimethylsiloxan, Polyurethane, Polyamide, Polyester, Polyethylen, Polypropylen, Polystyrol, Poylvinylchlorid, Synthese- und Naturkautschuk, Polycarbonate oder Polymethylmethacrylat eingesetzt werden. Die Substrate können als Granulat, Halbzeug oder Fertigprodukt beschichtet werden. Im Falle des Granulats oder des Halbzeugs ist bei der Weiterverarbeitung auf die mechanischen Eigenschaften der Beschichtung zu achten. Werden Fertigprodukte beschichtet, können durch gezieltes Eintauchen, Besprühen, Bestreichen oder Bedampfen ausgewählte Teile des Produktes beschichtet werden.

Erfindungsgemäß beschichtete Oberflächen können transparent sein und eignen sich zur Herstellung oder Beschichtung von Scheinwerfern, Windschutzscheiben, Werbeflächen oder Abdeckungen von Solarzellen (photovoltaisch und thermisch). Erfindungsgemäß beschichtete Oberflächen eignen sich daher hervorragend zur Herstellung von Erzeugnissen, die von polaren Flüssigkeiten nicht oder nur schwer benetzt werden sollen. Polare Flüssigkeiten sind insbesondere Wasser, wie Regenwasser oder Prozeßwasser aus industriellen Produktionen, Abwässer oder Flüssigkeiten aus dem medizinisch-biologischen Bereich wie Kochsalzlösung oder Blut.

Mit dem erfindungsgemäßen Verfahren beschichtete Oberflächen können zur Herstellung von Folien oder sonstigen transparenten Abdeckungen, sowie Behältern, Halterungen, Rohren, Schläuche oder Petrischalen verwendet werden.

Weitere Erzeugnisse, die ganz oder teilweise mit den erfindungsgemäßen Verfahren beschichtet werden können, sind z. B. Textilien, Möbel und Geräte, Rohre und Schläuche, kunststoffummantelte Kabel, Fußböden, Wand- und Deckenflächen, Lagerbehälter, Verpackungen, Fensterrahmen, Schilder, Dächer, Fassadenverkleidungen, Abdeckungen, Planen, Verkehrszeichen, Leitpfosten und medizintechnische Artikel.

Medizinische Artikel sind z. B. Drainagen, Kanülen, Stents, Gefäßprothesen, Zahnprothesen, Nahtmaterialien, Verbandstoffe, Vliesprodukte, Operationsbestecke, medizinische Schläuche oder Katheter.

Die folgenden Beispiele sollen die vorliegende Erfindung näher erläutern, ohne jedoch ihren Umfang zu beschränken.

### Herstellung der Beschichtungslösung

### Variante 1

An Luft wird bei Raumtemperatur N-(2-aminoethyl)-3-aminopropyltrimethoxysilan in verschiedenen Konzentrationen mit wasserfreiem *n*-Hexan gemischt. Die so hergestellte Lösung ist nur kurze Zeit verwendbar, da nach ca. 30 min durch Luftfeuchtigkeit die Hydrolyse und Vernetzung des Silans eintritt, was sich durch das Auftreten einer Trübung bemerkbar macht.

### Variante 2

Unter Argon-Schutzgasatmosphäre wird bei Raumtemperatur N-(2-aminoethyl)-3-aminopropyltrimethoxysilan in verschiedenen Konzentrationen mit wasserfreiem n-Hexan gemischt. Die so hergestellte Lösung ist über einen längeren Zeitraum verwendbar.

### Variante 3

Unter Argon-Schutzgasatmosphäre wird bei Raumtemperatur N-(2-aminoethyl)-3-aminopropyltrimethoxysilan in verschiedenen Konzentrationen mit wasserfreiem Cyclohexan gemischt. Die so hergestellte Lösung ist über einen längeren Zeitraum verwendbar.

### Variante 4

Unter Argon- Schutzgasatmosphäre wird bei Raumtemperatur 3-Aminopropylriethoxysilan in verschiedenen Konzentrationen mit wasserfreiem *n*-Hexan gemischt. Die so hergestellte Lösung ist über einen längeren Zeitraum verwendbar.

### Variante 5

Unter Argon-Schutzgasatmosphäre wird bei Raumtemperatur 3-Trimethoxysilylpropyl-diethylentriamin in verschiedenen Konzentrationen mit wasserfreiem *n*-Hexan gemischt. Die so hergestellte Lösung ist über einen längeren Zeitraum verwendbar.

### Beispiel 1: Beschichtung von Polysiloxan-Folien

Perthese®-Polysiloxanfolien (Laboratoire Perouse Implant, Frankreich) werden gründlich mit Wasser und mit Isopropanol gereinigt und bei Raumtemperatur getrocknet. Die so vorbehandelten Folien werden 10 s in eine nach Variante 2 dargestellte 1.0 Vol%ige Beschichtungslösung getaucht. Es wird bei Raumtemperatur an Luft bis zur Gewichtskonstanz, anschließend 1 h lang bei 110 °C getrocknet.

Nach der ersten Beschichtung wird die Folie 20 min in eine 2.5%ige Lösung von CF₃(CF₂)₇CO₂H in Isopropanol getaucht, bei Raumtemperatur getrocknet und anschließend wieder 1 h bei 110 °C getrocknet. Die beschichteten Folien werden ungefähr 4 h bei Raumtemperatur in Isopropanol extrahiert. Die fertig beschichteten Folien zeigen einen stark hydrophoben Charakter und lassen Wasser tropfenförmig abrollen.

### Beispiel 2: Beschichtung von Polyethylen-Folien

Polyethylenfolien werden gründlich mit Wasser und mit Isopropanol gereinigt und bei Raumtemperatur getrocknet. Die so vorbehandelten Folien werden 20 s in eine nach Variante 2 dargestellte 1.0 Vol%ige Beschichtungslösung getaucht. Es wird bei Raumtemperatur an Luft bis zur Gewichtskonstanz, anschließend 1 h lang bei 100 °C getrocknet.

Nach der ersten Beschichtung wird die Folie 20 min bei Raumtemperatur in eine 2.5%ige Lösung von CF₃(CF₂)₇CO₂H in Isopropanol getaucht, bei Raumtemperatur getrocknet und anschließend wieder 1 h bei 110 °C getrocknet. Die beschichteten Folien werden ungefähr 4 h bei Raumtemperatur in Isopropanol extrahiert. Die fertig beschichteten Folien zeigen einen stark hydrophoben Charakter und lassen Wasser tropfenförmig abrollen.

### Beispiel 3: Beschichtung von Polysiloxan-Folien

Perthese®-Polysiloxanfolien (Laboratoire Perouse Implant, Frankreich) werden gründlich mit Wasser und mit Isopropanol gereinigt und bei Raumtemperatur getrocknet. Die so vorbehandelten Folien werden 10 s nach Variante 2 beschrieben dargestellte 1.0 Vol%ige Beschichtungslösung getaucht. Es wird bei Raumtemperatur an Luft bis zur Gewichtskonstanz, anschließend 1 h lang bei 110 °C getrocknet.

Nach der ersten Beschichtung wird die Folie 30 min in eine 2.5%ige Lösung von 1,2-Epoxy-3-(perfluornonyl)propan in Isopropanol bei 40 °C getaucht, bei Raumtemperatur getrocknet und anschließend wieder 1 h bei 110 °C getrocknet. Die beschichteten Folien werden ungefähr 4 h bei Raumtemperatur in Isopropanol extrahiert. Die fertig beschichteten Folien zeigen mit einem Randwinkel von 130 ° einen stark hydrophoben Charakter und lassen Wasser tropfenförmig abrollen.

### Beispiel 4: Beschichtung von Polysiloxan-Folien

Perthese®-Polysiloxanfolien (Laboratoire Perouse Implant, Frankreich) werden gründlich mit Wasser und mit Isopropanol gereinigt und bei Raumtemperatur getrocknet. Die so vorbehandelten Folien werden 10 s in eine nach Variante 2 dargestellte 1.0 Vol%ige Beschichtungslösung getaucht. Es wird bei Raumtemperatur an Luft bis zur Gewichtskonstanz, anschließend 1 h lang bei 110 °C getrocknet.

Nach der ersten Beschichtung wird die Folie 30 min bei Raumtemperatur in eine 2.5%ige Lösung von Perfluoroctylsulfonylchlorid in CCl₄ getaucht, bei Raumtemperatur getrocknet und anschließend wieder 1 h bei 110 °C getrocknet. Die beschichteten Folien werden ungefähr 4 h bei Raumtemperatur in Isopropanol extrahiert. Die fertig beschichteten Folien zeigen einen stark hydrophoben Charakter und lassen Wasser tropfenförmig abrollen.

### Beispiel 5: Variation der Tropfendurchmesser

Perthese®-Polysiloxanfolien (Laboratoire Perouse Implant, Frankreich) werden gründlich mit Wasser und mit Isopropanol gereinigt und bei Raumtemperatur getrocknet. So vorbehandelten Folien werden einzeln 10 s in jeweils nach Variante 2 dargestellte 5.0, 2.0, 1.25, 1.0 und 0.5 Vol%ige Beschichtungslösung getaucht. Es wird bei Raumtemperatur an Luft bis zur Gewichtskonstanz, anschließend 1 h lang bei 110 °C getrocknet.

Auf diese Weise beschichtete Folien wurden mit einem Rasterelektronenmikroskop (Fa. Phillips, SEM 515) untersucht. Die Proben wurden vor den Aufnahmen mit Geld/Palladium besputtert, die Vergrößerung betrug jeweils 500 : 1.

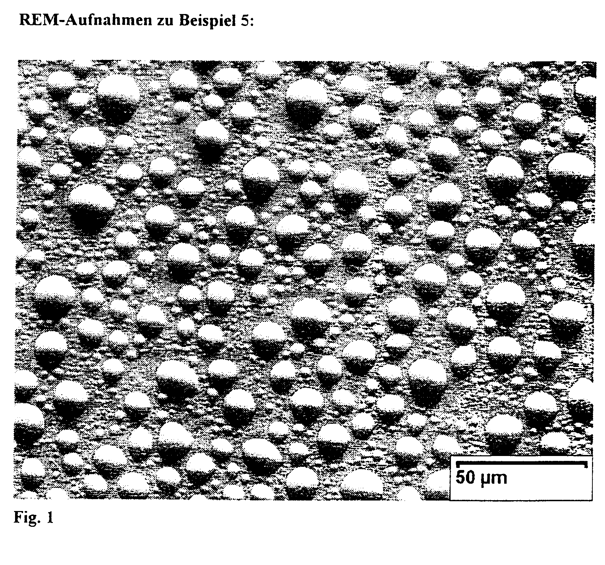

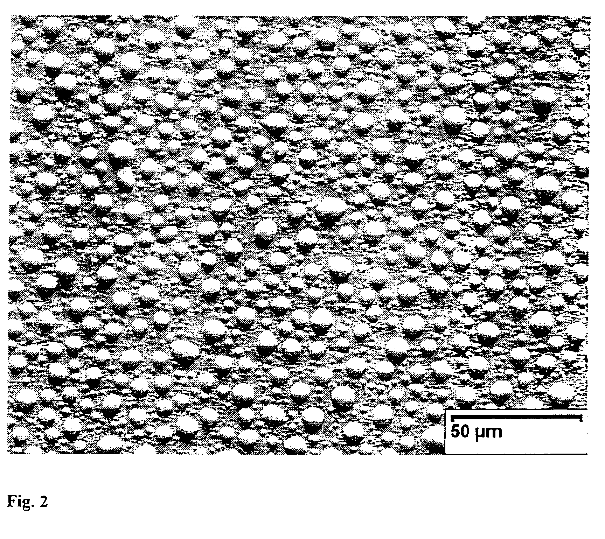

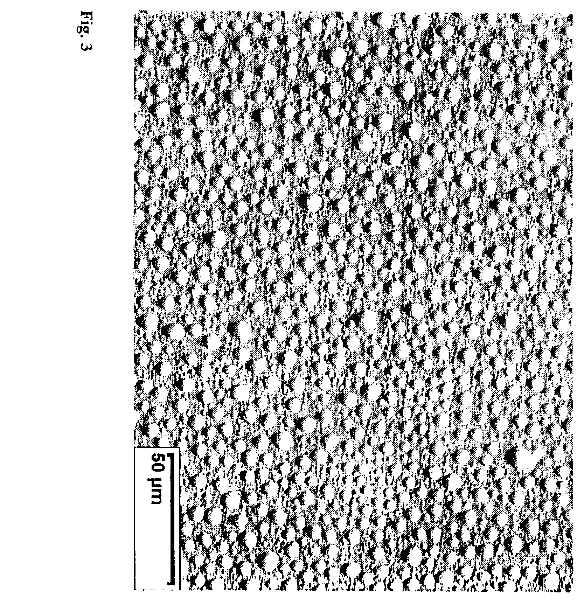

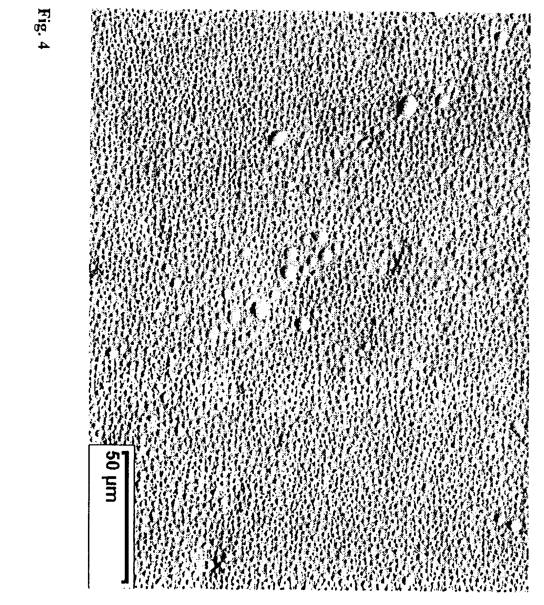

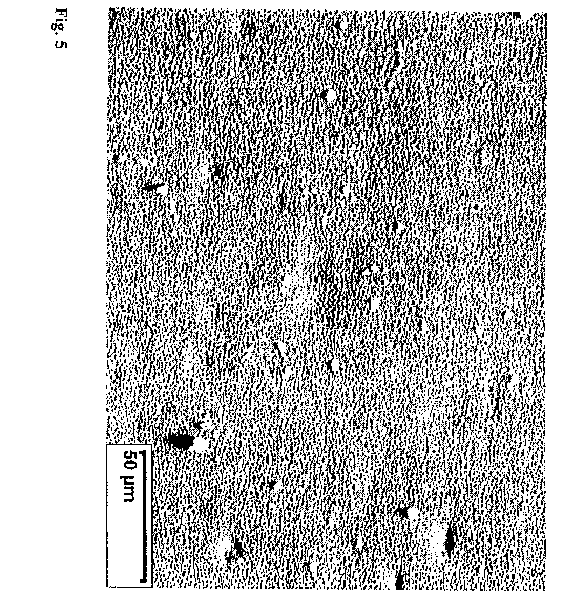

Fig. 1-5 dokumentieren die Abhängigkeit der Tropfengröße und damit der Erhebungen von der Silankonzentration.

**Tabelle 1**

| Silankonzentration [Vol%] | Mittlerer Tropfendurchmesser [µm] | |
|---|---|---|
| 5.0 | 10-20 | Fig. 1 |
| 2.5 | 7-10 | Fig. 2 |
| 1.25 | 3-5 | Fig. 3 |
| 1.0 | 1-2 | Fig. 4 |
| 0.5 | 0.7-1.1 | Fig. 5 |

## Patentansprüche

1. Verfahren zur Herstellung von dauerhaft hydrophoben Beschichtungen auf polymeren Substraten,
dadurch gekennzeichnet,
daß die polymeren Substrate zunächst mit einem Silanderivat
der Formel I
[Y(R¹Z)ₘR²]ₙSiR³ₒX₄₋ₙ₋ₒ (I)
mit
o = 0 bis 2,
n = 0 bis (3 - o),
m = 0 bis 5
R¹, R², R³ = C₁-C₁₂-Alkylrest, C₂-C₁₂-Alkylenrest, Phenylrest oder Phenylalkylrest,
wobei R² und R³ jeweils gleich oder verschieden zu R¹ sind,
Y = HS-, H₂N-, HR¹N-, R¹₂N-, -Cl, -Br, -I, -CN, R¹S-, 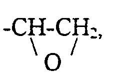 -SO₂Cl, OCN-, -CO₂R¹, -SCN
Z = -S-, -O-, R¹N-, HN-,
X = F-, Cl-, Br-, I-, R⁴O-, HO-, H-, -NR₂¹
mit
R⁴ = C₁-C₆-Alkylrest,
C₂-C₈-Alkoxyrest,
C₅-C₇-cycloaliphatischer Rest,
-C(O)R¹,
-Si(CH₃)₃
Phenylrest oder Phenylalkylrest,
und anschließend mit einer hydrophoben Verbindung umgesetzt werden, wobei die Oberfläche des polymeren Substrates nach der Umsetzung mit dem Silanderivat eine Strukturierung aufweist.

2. Verfahren nach Anspruch 1,
dadurch gekennzeichnet,
daß die hydrophoben Verbindungen eine funktionelle Gruppe und mindestens eine hydrophobe Alkyl- oder Phenylgruppe aufweisen.

3. Verfahren nach Anspruch 2,
dadurch gekennzeichnet,
daß die mindestes eine hydrophobe Alkyl- oder Phenylgruppe ganz oder teilweise fluoriert ist.

4. Verfahren nach einem der Ansprüche 1 bis 3,
dadurch gekennzeichnet,
daß als hydrophobe Verbindung Perfluoralkylsulfonylhalogenide, 1,2-Epoxy-3-per-fluoralkylpropane, Perfluoralkylalkohole, Perfluoralkylhalogenide, Brom- oder Chlorperfluoralkylacetylester, Alkylhalogenide, Benzylhalogenide, Perfluoralkylcarbonsäuren, Alkylcarbonsäuren oder deren Ester oder Anhydride sowie Gemische dieser Verbindungen eingesetzt werden.

5. Verfahren nach Anspruch 1,
dadurch gekennzeichnet,
daß als hydrophobe Verbindung fluorhaitige Polymere oder Copolymere eingesetzt werden.

6. Verfahren nach einem der Ansprüche 1 bis 5,
dadurch gekennzeichnet,
daß nach Umsetzen des polymeren Substrats mit dem Silanderivat gemäß Formel I die so erhaltene strukturierte Oberfläche hydrolysiert wird.

7. Verfahren nach einem der Ansprüche 1 bis 6,
dadurch gekennzeichnet,
daß nach Umsetzen des polymeren Substrats mit dem Silanderivat gemäß Formel I und einer hydrophoben Verbindung eine Trocknung bei 20 - 150 °C durchgeführt wird.

8. Verfahren nach einem der Ansprüche 1 bis 7,
dadurch gekennzeichnet,
daß als polymeres Substrat Polysiloxan, Polydimethylsiloxan, Polyethylen, Polyamide, Polyurethane, Polyester, Polypropylen, Polystyrol, Polyvinylchlorid, Synthese- und Naturkautschuk, Polycarbonate oder Polymethylmethacrylat eingesetzt werden.

9. Verwendung von gemäß einem der Ansprüche 1 bis 8 beschichteten Oberflächen zur Herstellung von mit polaren Flüssigkeiten nicht oder nur schwer benetzbaren Erzeugnissen.

10. Verwendung von gemäß einem der Ansprüche 1 bis 8 beschichteten Oberflächen zur Herstellung von Folien oder transparenten Abdeckungen.

11. Verwendung von gemäß einem der Ansprüche 1 bis 8 beschichteten Oberflächen zur Herstellung von Behältern, Halterungen, Rohren oder Schläuchen.
